# FASCICULE DE BREVET EUROPEEN

(11) **EP 3 472 486 B1**
(45) Date de publication et mention de la délivrance du brevet: **02.09.2020**
(21) Numéro de dépôt: 17726138.5
(22) Date de dépôt: 05.05.2017
(51) Int. Cl.: F16D 48/06

(54) **PROCÉDÉ ET DISPOSITIF DE COMMANDE D'OUVERTURE ET DE FERMETURE AUTOMATIQUE D'UN EMBRAYAGE**
VERFAHREN UND VORRICHTUNG ZUR STEUERUNG DES AUTOMATISCHEN ÖFFNENS UND SCHLIESSENS EINER KUPPLUNG
METHOD AND DEVICE FOR CONTROLLING THE AUTOMATIC OPENING AND CLOSING OF A CLUTCH

(30) Priorité: 17.06.2016 FR 1655648
(43) Date de publication de la demande: 24.04.2019
(73) Titulaire: Renault S.A.S., 92100 Boulogne-Billancourt (FR)
(72) Inventeur: CHOUCHANA, Richard, 06100 Nice (FR); RIESENMEY, Fabrice, 91780 Chalo Saint Mars (FR)
(86) Numéro de dépôt international: PCT/FR2017/051087
(87) Numéro de publication internationale: WO 2017/216437

(56) Documents cités:
- DE-A1-102011 005 095
- DE-A1-102013 210 396
- US-A1- 2003 144 114
- US-A1- 2013 296 131

## Description

La présente invention se rapporte à la commande de l'ouverture automatique d'une chaîne de traction de véhicule, pour le déplacement du véhicule en roue libre, voir DE102011005095, US 2013/296131.

Plus précisément, elle a pour objet un procédé de commande de l'ouverture automatique d'un embrayage d'entrée de transmission reliant un moteur d'entraînement à un mécanisme de changement de vitesses de véhicule, dont le conducteur dispose d'un levier de vitesses déplaçable entre plusieurs positions fonctionnelles incluant une position de fonctionnement automatique où les décisions de changement de vitesses sont prises en charge par une unité de contrôle de la transmission.

L'invention a également pour objet un dispositif de commande de l'ouverture automatique d'un embrayage d'entrée de transmission reliant un moteur d'entraînement de véhicule à un mécanisme de changement de vitesses, comprenant un actionneur de commande d'embrayage placé sous le contrôle d'une unité de calcul de la transmission, échangeant des requêtes de couple avec une unité de calcul du moteur d'entraînement, et une interface de commande de vitesses placée dans l'habitacle du véhicule à, disposition du conducteur.

Les systèmes d'embrayage électroniques appelés « *e-clutch »* sont associés le plus souvent à des transmissions à commande manuelle. Certains systèmes proposés regroupent, d'une part un embrayage automatique adapté aux boîtes manuelles pour ne pas avoir à se servir de la pédale de gauche dans les bouchons, et d'autre part une fonction « *stop*/*start* » coupant le moteur pour mettre la voiture en roue libre, lors d'une décélération.

Un système embrayage électronique peut ajouter à une commande d'embrayage conventionnelle la possibilité d'actionner l'embrayage sans intervention du conducteur. Le système peut aussi fonctionner en parallèle à une commande d'embrayage conventionnelle, en assurant le contrôle électronique complet des fonctions dites :
- « *Coasting stop* », ou « *accostage »* avec la coupure de moteur avant arrêt du véhicule pour une vitesse inférieure à 20 km/h,
- « *Sailing idle* » ou « *vol libre »* : moteur au ralenti véhicule roulant, pied levé,
- *« Sailing Stop »* : moteur coupé, véhicule roulant, pied levé.

Lorsqu'un système d'embrayage électronique, notamment pour la coupure du moteur au ralenti, est associé à une boîte de vitesses à commande manuelle, ce système agit sur l'embrayage. Il n'intervient pas sur la synchronisation ou la désynchronisation des rapports de boîte, ni sur leur commande d'engagement ou de dégagement.

Par la publication US 2009/0000851, on connaît un levier auxiliaire de commande de transmission automatique avec convertisseur de couple, déplaçable manuellement à l'écart d'une position neutre dans une première direction pour sélectionner un mode de fonctionnement avec frein moteur, et dans une deuxième direction, opposée à la première, pour sélectionner un deuxième mode de fonctionnement en roue libre, dans laquelle le moteur est déconnecté. Ce levier auxiliaire à commande manuelle, pilote un débrayage ou un embrayage de la chaîne de transmission, par un convertisseur de couple associé à un embrayage hydraulique. Toutefois, il n'est pas associé à la fonction de commande des vitesses.

La présente invention vise à associer les fonctions de vol libre et d'accostage, à la fonction passage de vitesses d'une transmission automatisée.

Dans ce but, elle propose que dans un mode de fonctionnement automatique de la transmission, l'embrayage d'entrée soit ouvert automatiquement au cours du déplacement du véhicule lorsque des conditions de roulage particulières sont réunies, de manière à autoriser temporairement le déplacement du véhicule en roue libre.

L'unité de contrôle de la transmission peut communiquer directement avec celle du moteur par un réseau électrique filaire, pour échanger notamment des requêtes de couple.

Dans un mode de réalisation préféré, la commande d'ouverture automatique de l'embrayage est couplée avec un système de localisation par satellites et/ou de navigation, de manière à exploiter les données prédictives d'un tel système, dans la gestion de l'ouverture et de la fermeture automatique de l'embrayage.

L'interface de commande dont dispose le conducteur dans l'habitacle du véhicule, présente alors une position fonctionnelle, imposant à la transmission un mode de fonctionnement dans lequel l'embrayage d'entrée est ouvert automatiquement au cours du déplacement du véhicule lorsque des conditions de roulage particulières sont réunies, de manière à autoriser temporairement le déplacement du véhicule en roue libre.

L'interface peut être un levier de vitesses présentant une position fonctionnelle imposant à la transmission un mode de fonctionnement dans lequel l'embrayage d'entrée est ouvert automatiquement au cours du déplacement du véhicule lorsque des conditions de roulage particulières sont réunies, de manière à autoriser temporairement le déplacement du véhicule en roue libre.

L'interface peut également être un écran présentant au conducteur une grille de sélection tactile, qui présente une zone d'activation d'un mode de fonctionnement dans lequel l'embrayage d'entrée est ouvert automatiquement au cours du déplacement du véhicule lorsque des conditions de roulage particulières sont réunies, de manière à autoriser temporairement le déplacement du véhicule en roue libre.

L'invention permet ainsi d'associer les fonctions de vol libre et d'accostage à une fonction de localisation par GPS (*Global Positionning System*)*,* en exploitant les données prédictives de celle-ci sur leur commande. Enfin, elle est compatible avec une architecture électrique de véhicule non multiplexée.

D'autres caractéristiques et avantages de la présente invention, seront mieux compris à la lecture de la description suivante de la description d'un mode de réalisation non limitatif de celle-ci, en liaison avec les dessins annexés, sur lesquels :
- la figure 1 est un schéma éclaté du système proposé,
- la figure 2 montre un actionneur d'embrayage,
- les figures 3A à 3C, illustrent son fonctionnement,
- la figure 4 représente un levier de vitesses,
- la figure 5 est un exemple de grille de vitesses compatible avec l'invention, et
- les figures 6A et 6B montrent des exemples d'écran tactile servant d'interface à la place du levier.

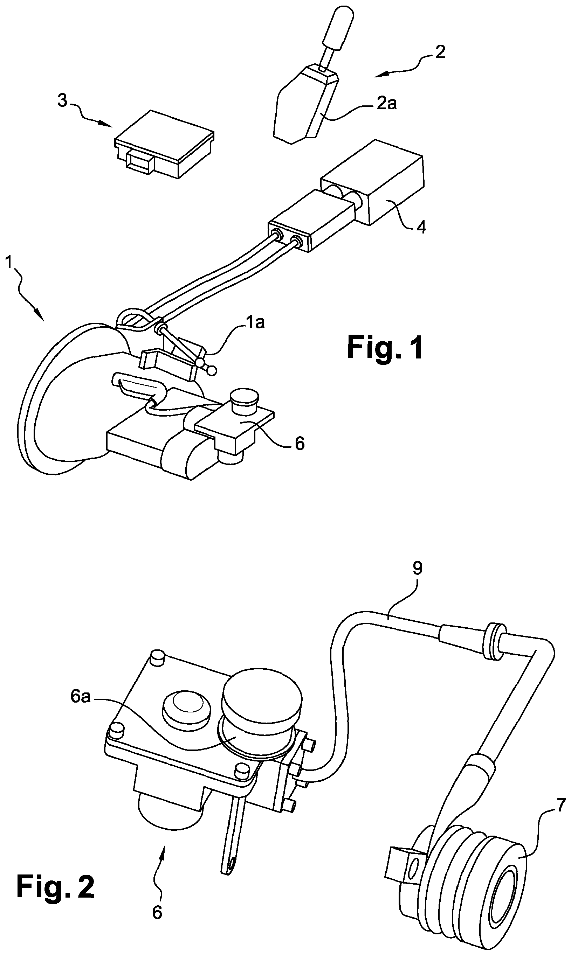

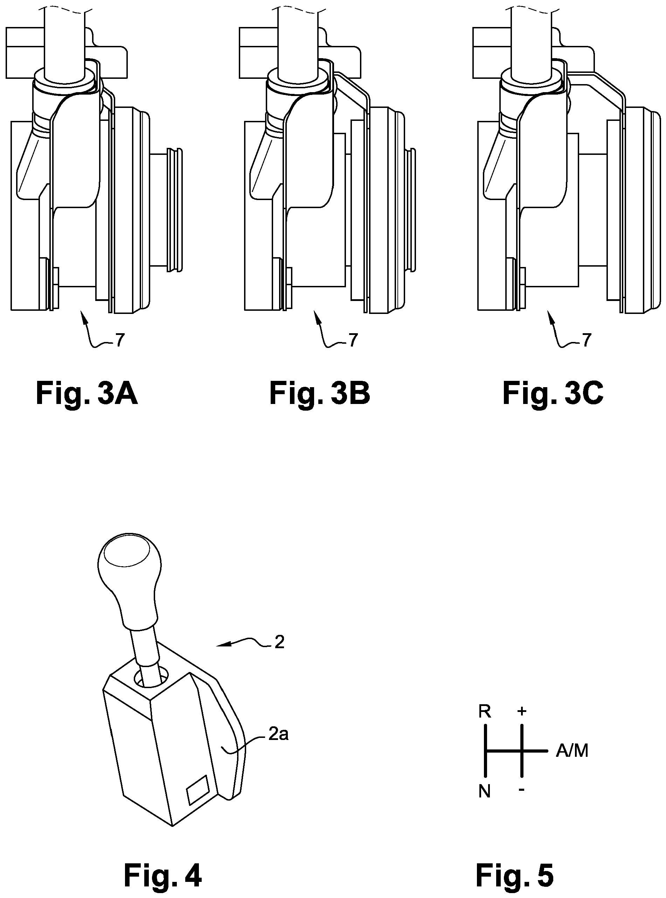

La boîte de vitesses 1 de la figure 1 est par exemple une boîte de vitesses mécanique (BVM) standard avec un module de commande de vitesses la. Le levier de vitesses 2 (reproduit sur la figure 4 avec son embase 2a) a par exemple une position stable, où il revient automatiquement, dès qu'il est relâché, quelle que soit la (ou les) direction(s) dans laquelle il a été déplacé à partir de celle-ci. La référence 3 désigne l'unité de calcul de transmission (TCU pour *Transmission Control Unit*) associée. Un actionneur de commande de vitesse électromécanique 4 doté d'un accéléromètre (non représenté), est relié par des câbles de sélection et de passage de vitesses 5a, 5b, à un actionneur de commande d'embrayage 6, reproduit sur la figure 2. L'actionneur 6 contrôle une butée d'embrayage, par exemple du type concentrique cylindrique (ou CSC pour « *Concentric Slave Cylinder »*) 7. Les branchements de l'actionneur 6 sur le module de commande la, sont de préférence du type prêt à l'emploi (« *plug-and-play »*).

La boîte de vitesses 1 peut être une boîte de vitesses manuelle conventionnelle à arbres parallèles. L'actionneur de commande de boîte la assure la sélection des lignes de vitesses, et le passage de vitesse sur la ligne sélectionnée. L'unité de calcul de transmission 3 assure le contrôle de l'actionneur de boîte la et de l'actionneur d'embrayage 6, notamment lors des opérations de démarrage, de changements de vitesses et de mise à l'arrêt du véhicule. Il commande également ces mêmes actionneurs, pour ouvrir l'embrayage et placer la boîte au point mort durant les phases de « vol libre » ou d' « accostage » où la transmission est ouverte pour que le véhicule se déplace temporairement en roue libre, sur sa lancée.

Dans un mode de fonctionnement automatique de la transmission, l'embrayage d'entrée est ouvert automatiquement au cours du déplacement du véhicule lorsque des conditions de roulage particulières sont réunies, de manière à autoriser temporairement le déplacement du véhicule en roue libre. Le déplacement temporaire du véhicule en roue libre dans mode de fonctionnement identifié comme « *Coasting stop », « Sailing idle* » ou « *vol libre* », ou encore « *Sailing Stop* » implique la maîtrise de l'entrée dans ce mode de fonctionnement particulier et de sa sortie, à la fois pour des raisons de confort de conduite et pour des impératifs de sécurité.

Conformément à l'invention, l'ouverture et la fermeture de l'embrayage s'effectuent sans intervention du conducteur sur le levier de vitesses, dans ce mode automatique. En effet, le conducteur dispose de son levier de vitesses. Il le déplace entre plusieurs positions fonctionnelles, dont une position de fonctionnement automatique de la transmission où les décisions de changement de vitesses et sont pris en charge par l'unité de contrôle de la transmission.

En d'autres termes, l'invention propose d'associer un système d'embrayage électronique (« *e-clutch* ») avec une commande de boîte robotisée. Une commande d'ouverture et de fermeture automatique d'embrayage se substitue ainsi à une commande d'embrayage conventionnelle pour pouvoir actionner l'embrayage sans intervention du conducteur, dans des circonstances particulières, sous le contrôle de l'unité de contrôle du moteur qui analyse les conditions de roulage (vitesse, pente, charge, etc.) et les requêtes du conducteur pour demander à l'unité de calcul de la transmission d'ouvrir ouvrir ou de fermer l'embrayage d'entrée, et de placer le mécanisme de changement de vitesses au neutre.

Le dispositif permet l'ouverture automatique de l'embrayage d'entrée de la transmission, qui relie le moteur au un mécanisme de changement de vitesses 1. Il comprend l'actionneur de commande d'embrayage 6 placé sous le contrôle de l'unité de calcul de la transmission 3, qui échange des requêtes de couple avec l'unité de calcul du moteur d'entraînement, et l'interface de commande de vitesses 2, 8 placé dans l'habitacle du véhicule à disposition du conducteur. Il prend la main sur l'ensemble du périmètre de la commande d'embrayage et du passage de vitesses, pour assurer le contrôle électronique complet de la fonction d'accostage et de vol libre.

L'actionneur de commande d'embrayage 6, qui n'a aucun caractère limitatif, se retrouve sur la figure 2, avec son réservoir d'huile 6a. Il est relié par une conduite hydraulique 9 au récepteur concentrique hydraulique (CSC) 10, dont trois positions fonctionnelles sont illustrées par les figures 3A, 3B et 3C :
- la figure 3A, montre la CSC 7 en position embrayée (embrayage fermé à l'état usagé) en l'absence d'action du conducteur, et de la commande automatique,
- la figure 3B montre la même CSC 7 embrayage en position embrayée, avec un embrayage à l'état neuf,
- la figure 3C montre la même CSC 8, sous l'action du conducteur sur son levier de vitesses, ou sous l'action du système d'embrayage électronique, déclenchant l'ouverture de l'embrayage.

Avec une boîte de base manuelle, assortie d'un module de robotisation, tel que décrit ci-dessus, la stratégie globale de contrôle proposée est de passer sur un mode automatique dans lequel le TCU permet un passage au neutre de la boîte sur ordre de l'unité de contrôle moteur (ECU pour *Engine Control Unit*). La logique de commande est alors la suivante :
- pas de passage au neutre automatique en mode manuel,
- dans un mode automatique, analyse des conditions de roulage par l'ECU, calcul et émission d'une requête stratégique, d'activation des fonctions vol libre ou accostage, impliquant l'ouverture automatique de l'embrayage,
- émission de la requête sur le réseau électrique du véhicule (réseau CAN) sous la forme d'une information prédictive (par exemple, 400ms avant la prise de décision),
- prise en compte de la requête par le TCU,
- ouverture automatique de l'embrayage,
- désengagement du rapport engagé, et
- sélection de la ligne neutre par la commande interne de vitesses de la boîte,
- détermination par le TCU de la ligne de sélection du rapport ciblé pour le réengagement, et pré-positionnement de la commande interne sue celle-ci,
- maintien ou adaptation de la ligne, selon la vitesse de déplacement du véhicule.

Concrètement,
- l'ouverture de l'embrayage peut-être suivie du désengagement du rapport engagé et de la sélection du neutre dans le mécanisme de changement de vitesses,
- l'embrayage d'entrée peut-être refermé automatiquement sans quitter le mode de fonctionnement automatique de la transmission, lorsque les conditions de déplacement en roue libre ne sont plus réunies,
- l'unité de contrôle de la transmission peut déterminer le rapport à réengager lorsque les conditions de déplacement en roue libre ne sont plus réunies.
- elle peut pré-positionner la commande interne du mécanisme changement de vitesses sur la ligne du rapport à réengager, et
- la ligne de sélection peut être déterminée en fonction de la vitesse du véhicule et du rapport ciblé.

Dans tous les cas, l'interface entre le conducteur et le dispositif de commande présente une position fonctionnelle imposant à la transmission un mode de fonctionnement dans lequel l'embrayage d'entrée est ouvert automatiquement au cours du déplacement du véhicule lorsque les conditions de roulage particulières sont réunies, pour autoriser temporairement le déplacement du véhicule en roue libre.

Dans un premier mode de réalisation de l'invention, l'interface est un levier ou sélecteur manuel 2, tel que celui de la figure 4 qui permet d'intégrer la fonction d'ouverture automatique de l'embrayage électronique dans la commande robotisée de la boîte de vitesses 1. Le levier de vitesses 2 est un sélecteur monostable, dont la grille de commande est par exemple celle de la figure 5. Le levier 2 dispose d'une position stable dans laquelle il revient automatiquement lorsqu'il est relâché, et d'une position impulsionnelle de changement de mode pour activer ou désactiver le mode d'ouverture automatique de l'embrayage. La position stable est située entre les positions + et - de passage montant ou descendant, en mode commande manuel impulsionnel. Le déplacement du levier 2 vers la droite, à partir de la position stable vers A/M, fait basculer la transmission entre les modes automatique (A) et manuel (M). Pour passer au neutre (N), on déplace le levier vers la gauche puis à 90° vers le bas ; pour passer en marche arrière, on le déplace vers la gauche, puis à 90° vers le haut.

Bien entendu, d'autres sélecteurs, monostables ou multi-stables non décrits, respectant des grilles de commande analogues ou différentes sont utilisables pour introduire dans une commande de boîte robotisée la fonction d'ouverture automatique de l'embrayage.

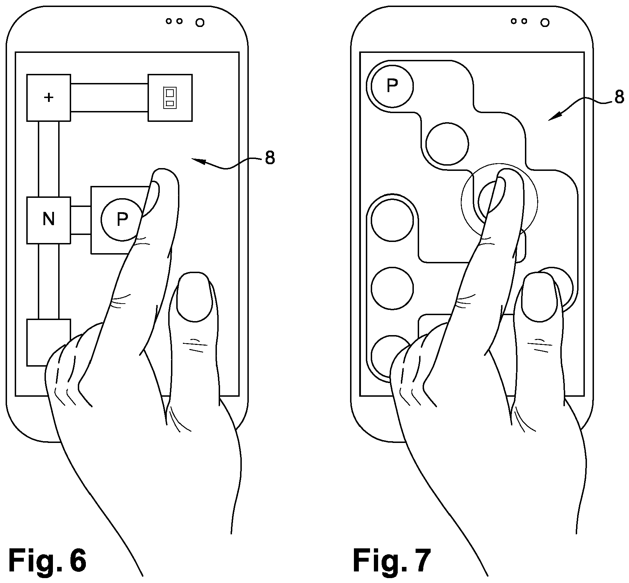

Dans un autre mode de réalisation illustré par les figures 6A et 6B, l'interface de commande est un écran 8, de préférence tactile. L'écran 8 présente au conducteur une grille de sélection tactile, qui inclut une zone tactile dédiée à l'activation du mode de fonctionnement dans lequel l'embrayage d'entrée est ouvert automatiquement au cours du déplacement du véhicule. Ceci lorsque des conditions de roulage particulières sont réunies, de manière à autoriser temporairement le déplacement du véhicule en roue libre.

L'invention propose également d'associer la fonction d'ouverture automatique d'embrayage à la fonction GPS (*Global Positionning System*) en exploitant les données de localisation, pour disposer d'information prédictive sur les rues et routes en pente. Cette association peut être proposée comme une option de fonctionnement particulière sur la commande de l'embrayage. En cas d'activation de la fonction par le conducteur, la commande impose les actions d'ouverture ou de fermeture automatique d'embrayage, en fonction de la pente annoncée par le GPS. L'information GPS, et sa prise en main sur le système d'embrayage, peuvent apparaître directement, de manière prédictive ou directe, sur un écran d'affichage du véhicule.

L'affichage (par exemple d'une pente à venir) permet au conducteur, d'anticiper la mise en roue libre du véhicule. L'ouverture de la chaîne cinématique et le passage au neutre sont déclenchées de manière anticipée, et/ou en respectant une temporisation calculée en fonction de la vitesse du véhicule et de son inertie. La fermeture de l'embrayage peut aussi être anticipée, par exemple lors de la détection anticipée d'un obstacle, d'un embouteillage, d'un virage imminent, d'un motif sécuritaire, etc. En résumé, la commande peut être couplée avec un système de localisation par satellites et/ou de navigation, de manière à exploiter les données prédictives de ce système dans la gestion de l'ouverture et de la fermeture automatique de l'embrayage.

De manière plus générale, tout système de navigation ou de guidage peut prendre la main en temps réel, ou par anticipation, sur les actions d'ouverture ou de fermeture ou automatique de l'embrayage. Le dispositif de commande est alors couplé avec le système de localisation par satellites et/ou de navigation, de manière à exploiter les données prédictives de ce système dans la gestion de l'ouverture et de la fermeture automatique de l'embrayage.

L'échange des informations de commande entre les unités de calcul et les actionneurs, peut s'effectuer au travers du réseau multiplexé du véhicule. Si toutefois le réseau de bord du véhicule n'est pas multiplexé, l'échange des signaux entre les unités de calcul, notamment les requêtes de couple, peut poser des problèmes. Il est alors nécessaire d'adopter un mode d'échange de signaux approprié, notamment pour assurer la transmission directe des requêtes de couple. L'architecture électrique du véhicule nécessite dans ce cas une adaptation, notamment pour assurer la bonne interaction du moteur et de la boîte de vitesses. Une solution à ce problème, est d'activer des entrées de logiciel spécifiques aux transmissions automatiques, sur l'unité de calcul du moteur. Ces entrées lui permettent de communiquer directement avec l'unité de contrôle de la transmission, par un réseau électrique filaire, pour échanger avec celle-ci des requêtes de couple. L'algorithme du calculateur moteur sait alors prendre en compte instantanément le débit de trames de la transmission.

Avec cette option, les requêtes de couple de la transmission sont ainsi directement prises en compte dans l'unité de calcul du moteur (de la même façon qu'avec une messagerie multiplexée), dont les algorithmes peuvent tirer profit des protocoles de communication d'une transmission automatique. Ceci permet notamment :
▪ d'inhiber les filtres curatifs du calculateur moteur,
▪ de mettre en place des stratégies de pilotage en couple (« *Torque Management* ») sur le contrôle de la sélection et du passage des vitesses, de même que sur la commande embrayage, et
▪ de mettre en place un protocole de diagnostic et de mémorisation de défauts détecter, de les mémoriser, et d'imposer des auto-adaptatifs de contrôle.

Les avantages de l'invention sont nombreux. Une amélioration très nette des prestations, notamment sur les stratégies de sélection et de passage de vitesses, est perceptible dès la prise en main du dispositif. Son impact bénéfique sur la protection de l'embrayage et des synchroniseurs de la boîte, est également avéré.

## Revendications

1. Procédé de commande de l'ouverture automatique d'un embrayage d'entrée de transmission reliant un moteur d'entraînement à un mécanisme de changement de vitesses de véhicule dont le conducteur dispose d'un levier de vitesses déplaçable entre plusieurs positions fonctionnelles incluant une position de fonctionnement automatique où les décisions de changement de vitesses sont pris en charge par une unité de contrôle de la transmission, **caractérisé en ce que** dans le mode de fonctionnement automatique de la transmission,
- l'embrayage d'entrée est ouvert automatiquement au cours du déplacement du véhicule lorsque des conditions de roulage particulières sont réunies, de manière à autoriser temporairement le déplacement du véhicule en roue libre, et l'ouverture de l'embrayage est suivie du désengagement du rapport engagé et de la sélection du neutre dans le mécanisme de changement de vitesses,
- et il est refermé automatiquement sans quitter le mode de fonctionnement automatique de la transmission, lorsque les conditions de déplacement en roue libre ne sont plus réunies.

2. Procédé de commande selon la revendication 1, **caractérisé en ce que** l'unité de contrôle de la transmission détermine le rapport à réengager lorsque les conditions de déplacement en roue libre ne sont plus réunies.

3. Procédé de commande selon la revendication 2, **caractérisé en ce que** l'unité de contrôle de la transmission pré-positionne la commande interne du mécanisme changement de vitesses sur la ligne du rapport à réengager.

4. Procédé de commande selon la revendication 1, 2 ou 3, **caractérisé en ce que** la ligne de sélection est déterminée en fonction de la vitesse du véhicule et du rapport ciblé.

5. Procédé de commande selon l'une des revendications précédentes, **caractérisé en ce que** l'unité de contrôle de la transmission communique directement avec celle du moteur par un réseau électrique filaire pour lui envoyer des requêtes de couple.

6. Procédé de commande selon l'une des revendications précédentes, **caractérisé en ce qu'**elle est couplée avec un système de localisation par satellites et/ou de navigation, de manière à exploiter les données prédictives de ce système dans la gestion de l'ouverture et de la fermeture automatique de l'embrayage.

7. Dispositif de commande de l'ouverture automatique d'un embrayage d'entrée de transmission reliant un moteur d'entraînement de véhicule à un mécanisme de changement de vitesses (1), commandé selon un procédé selon l'une des revendications précédentes, comprenant un actionneur de commande d'embrayage (6) placé sous le contrôle d'une unité de calcul de la transmission (3), échangeant des requêtes de couple avec une unité de calcul du moteur d'entraînement, et une interface de commande de vitesses (2, 8) placé dans l'habitacle du véhicule à disposition du conducteur, **caractérisé en ce que** l'interface (2, 8) présente une position fonctionnelle imposant à la transmission un mode de fonctionnement dans lequel l'embrayage d'entrée est ouvert automatiquement au cours du déplacement du véhicule lorsque des conditions de roulage particulières sont réunies, de manière à autoriser temporairement le déplacement du véhicule en roue libre.

8. Dispositif de commande selon la revendication 7, **caractérisé en ce que** l'interface est un levier de vitesses (2), disposant d'une position stable dans laquelle il revient automatiquement lorsqu'il est relâché, et d'une position impulsionnelle de changement de mode pour activer ou désactiver le mode d'ouverture automatique de l'embrayage.

9. Dispositif de commande selon la revendication 8, **caractérisé en ce que** calculateur du moteur dispose d'entrées logicielles lui permettant de communiquer directement avec l'unité de contrôle de la transmission, pour échanger avec celle-ci des requêtes de couple par un réseau électrique filaire.

10. Dispositif de commande selon la revendication 7, 8, ou 9, **caractérisé en ce qu'**il est couplé avec un système de localisation par satellites et/ou de navigation, de manière à exploiter les données prédictives de ce système dans la gestion de l'ouverture et de la fermeture automatique de l'embrayage.

11. Dispositif de commande selon la revendication 10, **caractérisé en ce que en ce que** l'interface de commande est un écran (8) présentant au conducteur une grille de sélection tactile qui inclut une zone tactile dédiée à l'activation d'un mode de fonctionnement dans lequel l'embrayage d'entrée est ouvert automatiquement au cours du déplacement du véhicule lorsque des conditions de roulage particulières sont réunies, de manière à autoriser temporairement le déplacement du véhicule en roue libre.

## Patentansprüche

1. Verfahren zum Steuern des automatischen Öffnens einer Getriebeeingangskupplung, die einen Antriebsmotor mit einem Gangwechselmechanismus des Fahrzeugs verbindet, für den der Fahrer über einen Schalthebel verfügt, der zwischen mehreren Betriebsstellungen bewegbar ist, die eine Automatikbetriebsstellung beinhalten, bei der die Gangwechselentscheidungen von einer Steuerungseinheit des Getriebes übernommen werden, **dadurch gekennzeichnet, dass** im Automatikbetriebsmodus des Getriebes
- die Eingangskupplung während der Fahrt des Fahrzeugs automatisch geöffnet wird, wenn besondere Fahrbedingungen erfüllt sind, so dass temporär das Segeln des Fahrzeugs zugelassen wird, und auf das Öffnen der Kupplung das Ausrücken des eingelegten Gangs und das Wählen der Neutralstellung im Gangwechselmechanismus folgt,
- und sie automatisch wieder geschlossen wird, ohne die Automatikbetriebsstellung des Getriebes zu verlassen, wenn die Segelbedingungen nicht mehr erfüllt sind.

2. Steuerverfahren nach Anspruch 1, **dadurch gekennzeichnet, dass** die Steuerungseinheit des Getriebes den Gang bestimmt, der wieder einzulegen ist, wenn die Segelbedingungen nicht mehr erfüllt sind.

3. Steuerverfahren nach Anspruch 2, **dadurch gekennzeichnet, dass** die Steuerungseinheit des Getriebes die interne Steuerung des Gangwechselmechanismus auf die Linie des wieder einzulegenden Gangs vorpositioniert.

4. Steuerverfahren nach Anspruch 1, 2 oder 3, **dadurch gekennzeichnet, dass** die Auswahllinie in Abhängigkeit von der Geschwindigkeit des Fahrzeugs und vom Ziel-Gang bestimmt wird.

5. Steuerverfahren nach einem der vorhergehenden Ansprüche, **dadurch gekennzeichnet, dass** die Steuerungseinheit des Getriebes direkt mit der des Motors über ein drahtgebundenes elektrisches Netz kommuniziert, um ihr Drehmomentanforderungen zu senden.

6. Steuerverfahren nach einem der vorhergehenden Ansprüche, **dadurch gekennzeichnet, dass** es mit einem satellitengestützten Positionsbestimmungssystem und/oder Navigationssystem gekoppelt ist, so dass die Vorhersagedaten dieses Systems beim Verwalten des automatischen Öffnens und Schließens der Kupplung verarbeitet werden.

7. Vorrichtung zum Steuern des automatischen Öffnens einer Getriebeeingangskupplung, die einen Antriebsmotor des Fahrzeugs mit einem Gangwechselmechanismus (1) verbindet, der nach einem Verfahren nach einem der vorhergehenden Ansprüche gesteuert wird, umfassend einen Kupplungsbetätigungsaktuator (6), welcher der Steuerung einer Recheneinheit des Getriebes (3) untersteht, die Drehmomentanforderungen mit einer Recheneinheit des Antriebsmotors austauscht, und eine Gangsteuerungsschnittstelle (2, 8), die im Innenraum des Fahrzeugs angeordnet ist und dem Fahrer zur Verfügung steht, **dadurch gekennzeichnet, dass** die Schnittstelle (2, 8) eine Betriebsstellung aufweist, die dem Getriebe einen Betriebsmodus vorgibt, in dem die Eingangskupplung während der Fahrt des Fahrzeugs automatisch geöffnet wird, wenn besondere Fahrbedingungen erfüllt sind, so dass temporär das Segeln des Fahrzeugs zugelassen wird.

8. Steuervorrichtung nach Anspruch 7, **dadurch gekennzeichnet, dass** die Schnittstelle ein Schalthebel (2) ist, der über eine stabile Stellung verfügt, in die er automatisch zurückkehrt, wenn er losgelassen wird, und eine Moduswechsel-Impulsstellung, um den Modus zum automatischen Öffnen der Kupplung zu aktivieren oder deaktivieren.

9. Steuervorrichtung nach Anspruch 8, **dadurch gekennzeichnet, dass** der Rechner des Motors über Softwareeingänge verfügt, die es ihm ermöglichen, direkt mit der Steuerungseinheit des Getriebes zu kommunizieren, um mit dieser Drehmomentanforderungen über ein drahtgebundenes elektrisches Netz auszutauschen.

10. Steuervorrichtung nach Anspruch 7, 8 oder 9, **dadurch gekennzeichnet, dass** sie mit einem satellitengestützten Positionsbestimmungssystem und/oder Navigationssystem gekoppelt ist, so dass die Vorhersagedaten dieses Systems beim Verwalten des automatischen Öffnens und Schließens der Kupplung verarbeitet werden.

11. Steuervorrichtung nach Anspruch 10, **dadurch gekennzeichnet, dass** die Steuerungsschnittstelle ein Bildschirm (8) ist, der dem Fahrer ein berührungsempfindliches Wählschema zeigt, das einen berührungsempfindlichen Bereich zum Aktivieren eines Betriebsmodus beinhaltet, in dem die Eingangskupplung während der Fahrt des Fahrzeugs automatisch geöffnet wird, wenn besondere Fahrbedingungen erfüllt sind, so dass temporär das Segeln des Fahrzeugs zugelassen wird.

## Claims

1. Method for controlling the automatic opening of a transmission input clutch linking a drive engine to a vehicle gear-shifting mechanism for which the driver has a gear lever that can be moved between a number of functional positions including a position of automatic operation in which the gear-shifting decisions are assumed by a control unit of the transmission, **characterized in that**, in the automatic mode of operation of the transmission,
- the input clutch is opened automatically during the movement of the vehicle when particular running conditions are met, so as to temporarily allow the coasting movement of the vehicle, and the opening of the clutch is followed by the disengagement of the engaged gear and by the selection of neutral in the gear-shifting mechanism,
- and it is reclosed automatically without leaving the automatic mode of operation of the transmission, when the coasting movement conditions are no longer met.

2. Control method according to Claim 1, **characterized in that** the control unit of the transmission determines the gear to be re-engaged when the coasting movement conditions are no longer met.

3. Control method according to Claim 2, **characterized in that** the control unit of the transmission prepositions the internal control of the gear-shifting mechanism on the line of the gear to be re-engaged.

4. Control method according to Claim 1, 2 or 3, **characterized in that** the selection line is determined as a function of the speed of the vehicle and of the gear targeted.

5. Control method according to one of the preceding claims, **characterized in that** the control unit of the transmission communicates directly with that of the engine by a wired electrical network to send it torque requests.

6. Control method according to one of the preceding claims, **characterized in that** it is coupled with a satellite location and/or navigation system, so as to exploit the predictive data of this system in managing the automatic opening and closing of the clutch.

7. Device for controlling the automatic opening of a transmission input clutch linking a vehicle drive engine to a gear-shifting mechanism (1), controlled according to a method according to one of the preceding claims, comprising a clutch control actuator (6) placed under the control of a computation unit of the transmission (3), exchanging torque requests with a computation unit of the drive engine, and a gear control interface (2, 8) placed in the interior of the vehicle available to the driver, **characterized in that** the interface (2, 8) has a functional position imposing a mode of operation on the transmission in which the input clutch is opened automatically during the movement of the vehicle when particular running conditions are met, so as to temporarily allow the coasting movement of the vehicle.

8. Control device according to Claim 7, **characterized in that** the interface is a gear lever (2), having a stable position to which it reverts automatically when it is released, and a momentary-action mode-changing position for activating or deactivating the automatic clutch opening mode.

9. Control device according to Claim 8, **characterized in that** the computer of the engine has software inputs allowing it to communicate directly with the control unit of the transmission, to exchange torque requests therewith by a wired electrical network.

10. Control device according to Claim 7, 8 or 9, **characterized in that** it is coupled with a satellite location and/or navigation system, so as to exploit the predictive data of this system in managing the automatic opening and closing of the clutch.

11. Control device according to Claim 10, **characterized in that** the control interface is a screen (8) presenting to the driver a touch- selection grid which includes a touch zone dedicated to the activation of a mode of operation in which the input clutch is opened automatically during the movement of the vehicle when particular running conditions are met, so as to temporarily allow the coasting movement of the vehicle.
